# EUROPEAN PATENT SPECIFICATION

(11) **EP 2 479 070 B1**
(45) Date of publication and mention of the grant of the patent: **20.08.2014**
(21) Application number: 11000460.3
(22) Date of filing: 21.01.2011
(51) Int. Cl.: B60R 21/13, B62D 21/16

(54) **Elongated structure for a vehicle**
Längliche Struktur für ein Fahrzeug
Structure allongée pour véhicule

(43) Date of publication of application: 25.07.2012
(73) Proprietor: Autoliv Development AB, 447 83 Vårgårda (SE); National Electric Vehicle Sweden AB, 461 38 Trollhättan (SE)
(72) Inventor: Pipkorn, Bengt, 43370 Sävedalen (SE); Lundström, Jesper, 46260 Vänesborg (SE)
(74) Representative: Edlund, Fabian

(56) References cited:
- EP-A1- 1 279 564
- DE-A1-102007 055 623
- DE-A1-102009 031 118
- JP-A- 2005 035 403

## Description

The invention is concerned with an elongated structure for a vehicle such as an A-, B- or C-pillar according to the preamble of claim 1.

It is a know problem in the automotive technology that the pillars, especially the A-pillar needs to be fairly strong in order to protect the vehicle occupants properly in case of a rollover accident of the vehicle. A straightforward approach to make a pillar stronger would of course be to increase its diameter, because the rigidity of a tube-shaped element like a pillar rises with its diameter. Also the resistance to torque rises with the diameter. Especially with an A-pillar there exists the problem that a very thick pillar is undesired, especially since it reduces the vision of the driver.

From generic WO 2007/059934 A1 it is known to provide an expandable part in or at a pillar, especially the A-pillar, which is expanded by gas coming from an inflator such as an gas generator when a rollover accident is detected. This expandable part is an elongated airbag made of sheet metal. In case of an A-pillar, the first end of this expandable part, namely its lower end, is mounted to a structure of a vehicle, for example near the wheel housing, while its second end, namely its upper end, is fixed to a part of the roof, especially the roof bar. Alternatively or additionally the expandable part can be connected to the outer surface of the A-pillar. When the expandable part is deployed the stiffness of the A-pillar rises due to its enlarged diameter. So, the A-pillar can have a relatively small diameter in normal operation but has a raised stiffness in an rollover accident.

Although huge improvements can be made with the use of an expandable part as described in the WO 2007/059934 A1, there exists the need for further improvements. That means that one wants to have either a better vision of the driver at a given strength of the pillar in case of an roll-over accident or one wants to have an increased strength of the pillar at a given diameter of the same in the normal operation mode. The need for a further improvement is urgent, since A-pillars of passenger cars tend to become longer and longer due to flat windscreen designs. Consequently, the invention seeks for a solution to further improve the arrangement described in the WO 2007/059934 A1.

This problem is solved by an elongated structure according to claim 1.

According to the invention an additional supporting element is provided having a supporting section being located near the expandable part between the first end and the second end of the elongated structure and being fixed to a portion of the vehicle other than the expandable part.

This supporting section is located and dimensioned such that the expandable part is not supported by this supporting section when the expandable part is not deployed, but is supported by the supporting section when the expandable part is deployed.

The supporting section is encircling the expandable part and can thus be a ring. Here, the inner diameter of this ring is larger than the diameter of the expandable part when the expandable part is in its non-deployed state and is a little smaller or equal to the diameter of the expandable part when the expandable part is in its deployed state. That means that the expandable part can expand freely but is additionally supported when deployed. That further means that this supporting takes advantage of the enlarged diameter of the expandable part.

In order to support the expandable part, the supporting element must be rigidly connected to a part of the vehicle other than the expandable part.

In a first preferred embodiment this part of the vehicle is adjacent to the first end of the elongated structure. In this case the supporting element further comprises a connection section connecting the supporting section with the vehicle part. So, an additional bearing point is created between the first and the second end of the expandable part, so that the unsupported length of the expandable part is reduced. Of course reducing the unsupported length of the expandable part makes it more stable.

In a second preferred embodiment, the supporting section is directly connected to a vehicle part, which can especially be the outer surface of the elongated structure, for example the outer surface of the A-pillar. In this case the supporting element can consist exclusively of the supporting section.

In case that the elongated structure is an A-pillar, which is the most important case, the supporting section is preferrably located in the lower third of the A-pillar, so that the vision of the driver is not affected to a considerable extend.

Further preferred embodiments are defined in the sub-claims and described hereinafter in view of the figures.

The invention will now be explained in detail by ways of embodiments in view of the accompanying figures.

The figures show:
- Figure 1: an A-pillar and adjacent parts of a vehicle with the A-pillar comprising an expandable part and a supporting element according to a first embodiment of the invention,
- Figure 2: a sectional view along line A-A in figure 1,
- Figure 3: a sectional view along line B-B in figure 1,
- Figure 4: a sectional view along line C-C in figure 1,
- Figure 5: what is shown in figure 1 when the expandable part is filled with gas and thus expanded,
- Figure 6: a sectional view along line D-D in figure 5,
- Figure 7: a sectional view along line E-E in figure 5,
- Figure 8: a sectional view along line F-F in figure 5,
- Figure 8a: a variation to what is shown in Figure 8,
- Figure 8b: a perspective view of the ring of Figure 8a,
- Figure 9: a variation to the first embodiment of the invention in a more detailed, perspective representation,
- Figure 10: what is shown in Figure 1 viewed from another angle,
- Figure 11: a second embodiment of the invention in a perspective representation,
- Figure 12: a section through the A-pillar of Figure 11,
- Figure 13: a part of the A-pillar of Figure 11,
- Figure 14: what is shown in figures 13 when the expandable part of the A-pillar is deployed,
- Figure 15: a expandable part, an end cap and a gas generator in a perspective view, and
- Figure 16: what is shown in Figure 15 in a side elevation with the end cap being welded to the expandable part.

### First embodiment

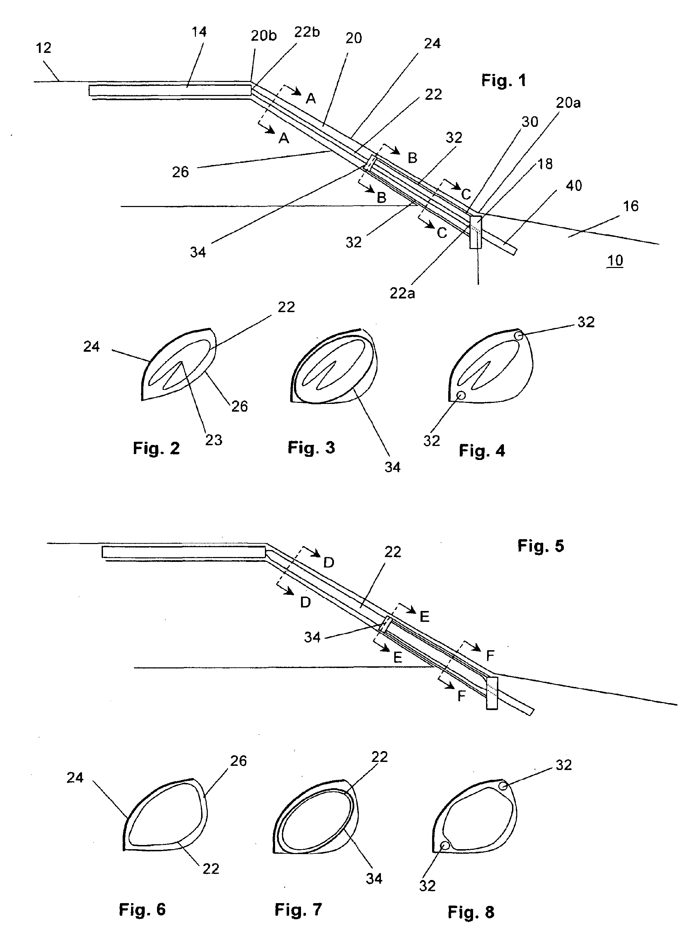

The figure 1 shows in a very schematic view an A-pillar 20 of a vehicle and adjacent parts of the vehicle 10. The A-pillar 20 extends from its first end 20a (its lower end) in the region of the rear end of the bonnet 16 to the roof 12 of the vehicle. The second end (upper end) of this A-pillar is denoted with 20b. When looking to Figure 1 and Figure 2 one can see that the A-pillar 20 consists in an upper region basically of two elements, namely the outer surface 24 of the vehicle, and an expandable part 22 extending parallel to the outer surface 24. Additionally, an inner lining 26 which points towards the interior of the vehicle is provided. The expandable part is located between the outer surface 24 and inner lining 26. In the schematic representation of figure 2 there are rather large gaps between the expandable part 22 and the outer surface 24 and the inner lining 26. This is drawn for overview reasons only, in practice the expandable part 22 abuts at least the inner side of the outer surface 24 and can be welded to the same. One can see that the expandable part 22, which is usually made of sheet metal, comprises a folding recess 23. One can also see from Figure 1 that the expandable part 22 extends basically along the complete length of the A-pillar 20, such that the first end 20a of the A-pillar and the first end 22a of the expandable part 22 nearly coincide. The same applies for the second ends 20b, 22b of the A-pillar 20 and the expandable part 22 respectively. Both ends of the expandable part 22 are connected, especially welded, to structural parts of the vehicle. Here, the second end 22b of the expandable part 22 is welded to the roof bar 14 and the first end 22a is welded to a support structure 18 of a vehicle, which can for example be located near the wheel housing. A gas generator 40 serving as inflator and being provided near the lower end of the A-pillar, is in fluid connection to the expandable part 22, such that the expandable part deploys on triggering of the gas generator 40.

A supporting element 30 extends from the support structure 18 parallel to the expandable part 22 between the outer surface 24 and the inner lining 26. This supporting element 30 extends basically to a third of the length of the A-pillar 20 or less. In the first embodiment, this supporting element 30 is comprised of two rods 32 being secured - for example welded - to the support structure 18 and a ring 34 being secured to the front end of the rods. This ring 34 forms the support section and the rods form the connecting section of this supporting element 30. The rods 32 can be attached (for example welded) to the inside the outer surface 24 of the A-pillar or they can be an integral part thereof, so that the rods 32 also reinforce the outer surface of the A-pillar. One can see from Figure 3 that the diameter of this ring 34 is larger than the diameter of the expandable part 22 when the expandable part is not deployed.

Figures 5 to 8 show the situation after the gas generator has been triggered and the expandable part has been filled by gas and is thus expanded, such that the diameter of the A-pillar is enlarged to approximately 60 mm. Especially one can see in Figure 7 that the expandable part 22 comes into contact with the ring 34 (although a small gap is drawn for the overview reasons). This means, that at least a part of the load which is applied to an upper section of the A-pillar 20 during an accident is directed into the supporting element 30. This has two main advantages: On the one hand the maximum arm is shortened and on the other hand the expandable part 22 has its maximum diameter at the point of the supporting section of the supporting element (ring 34). This is not the case at the ends 22a, 22b of expandable part 22, since here the expandable part is closed and welded to other vehicle parts. Of course it is better that the maximum diameter of the expandable part 22 can be used to transfer the force.

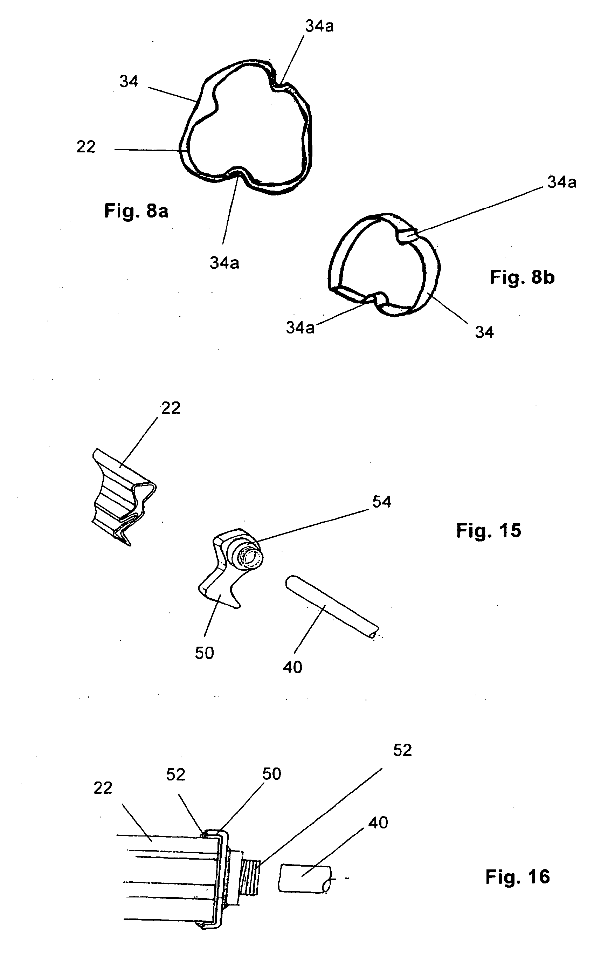

Figures 8a and 8b show a ring 34 in a preferred shape. Here, the ring 34 shows protrusions 34a pointing towards the inside of the ring 34. This enhances the form-fit that is being created at least in sections between the expandable part 22 and the ring 34 when the expandable part 22 is deployed.

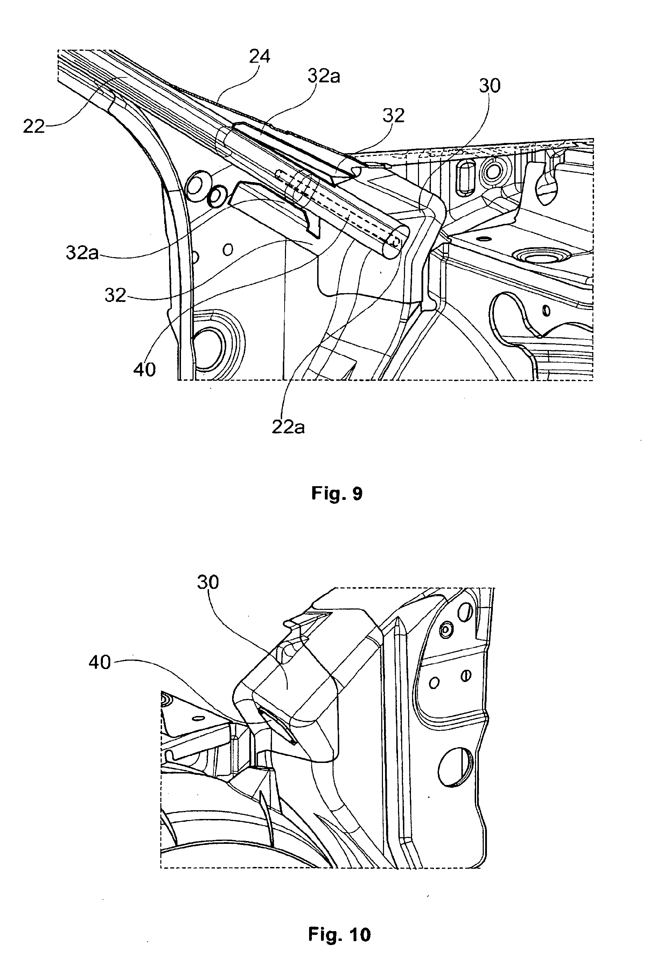

Figures 9 and 10 show a variation of the first embodiment of a supporting element 30. Here, the support section is not formed as a ring 34 encircling completely the expandable part 22. The two rods 32 of the supporting element 30 extending parallel to the expandable part 22 end as the plate-shaped ends 32a forming the supporting section. The distance of this plate-shaped ends 32a from the expandable part 22 is such that they do not contact the expandable part 22 when it is in non-deployed state and that the expandable part 22 comes into contact with the plate-shaped ends when it is deployed.

Another difference is that the gas generator 40 extends directly into the expandable part 22 which saves space and makes the mounting easier. Here, the supporting element 30 and the expandable part 22 are directly connected to one another - usually welded - such that the supporting element 30 has the further function to connect the first end 22a of the expandable part 22 rigidly to a structural part of the vehicle.

The embodiment makes it possible that the gas generator is mounted after the assembly of the vehicle and especially after corrosion treatments of the car body have been carried out. This is advantageous, since the gas generator should not be exposed to the harsh environment during corrosion treatment.

In a further variation of the first embodiment, the supporting element is a hollow cylinder extending from the support structure of the vehicle parallel to the expandable part.

It is preferred to mount the gas generator in or at the lower end of the expandable part for several reasons. First, this position of the gas generator will not lead to a local hardness of the outer surface of the vehicle that is likely being hit by a pedestrian during an accident. Second, this low mounting position leads to a slim upper part of the A-pillar, which is desired for the better vision of the driver. Third, this low position of the gas generator makes the assembly easy.

### Second embodiment

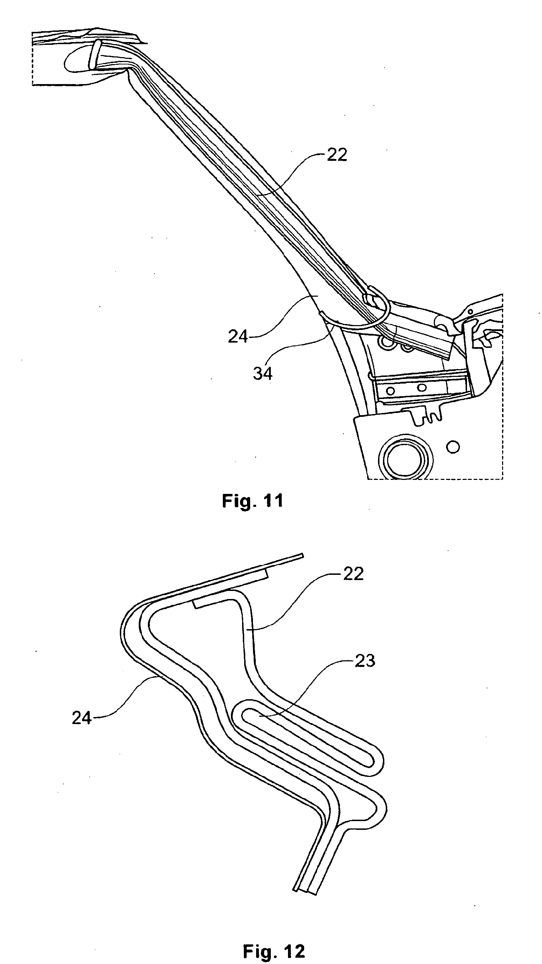

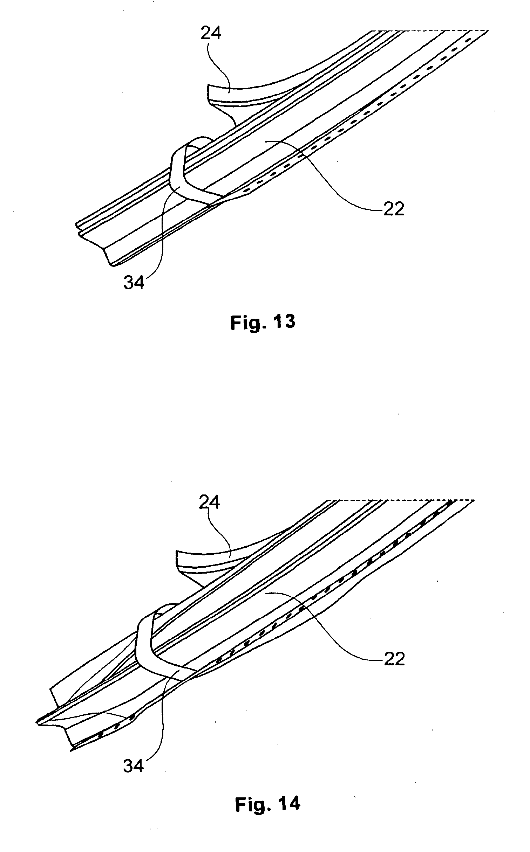

Figures 11 to 14 show a second embodiment of the invention. Figure 11 shows an A-pillar, a part of the roof-bar and a vehicle part adjacent to the lower end of the A-pillar in a 3-dimensional view. Here, the supporting element consists exclusively of its supporting section, namely a ring 34 or sleeve being connected to the outer surface 24 of the vehicle. The ring 34 or sleeve does not need to be completely closed, but the outer surface and the ring or sleeve together encircle the expandable part. The geometry of this ring 34 or sleeve is as in the first embodiment: The inner diameter of the ring 34 or sleeve is larger than the diameter of the non-deployed expandable part 22 but equal of a little less than the diameter of the deployed expandable part 22. This can be seen very good from Figures 13 and 14. So, a tight connection between the outer surface of the A-pillar and the deployed expandable part 24 is generated making the A-pillar stiffer.

Figure 12 is a more realistic view from what is shown in figure 2 and is a sectional view through an upper section of the A-pillar of Figure 11. One can see here that the expandable part 22, which is welded from two sheets of metal having a thickness of approximately 1,5 mm is in sections welded to the outer surface 24 of the A-pillar of the vehicle and comprises a folding recess 23. The inner lining 26 is not shown here.

Figures 15 and 16 show a preferred possibility how the lower end of the expandable part 22 can be sealed so that it is gas-tight and how the gas generator 40 can be connected to the expandable part 22, namely via and end cap 50 which has two functions: First, it seals the expandable part 22. For this purpose the end cap is welded to the expandable part via a weld seam 52 (Figure 16). Second, the end cap 50 serves for connecting the gas generator 40 to the expandable part 22. Therefore, the end cap 50 comprises a flange 54 with a thread. The end cap 50 can be welded to the expandable part 22 prior to the corrosion treatment of the car body. The gas generator 40 can conveniently be threaded to the end cap 50 at a late stage of the assembly, especially after the corrosion treatment.

As in the first embodiment, it is preferred to mount the gas generator in or at the lower end of the expandable part.

The invention has been described in view of an A-pillar which is likely to be the most important application of the invention. But it needs to be emphasised that the application can be applied to all elongated structures of a vehicle that need to be stiff during an accident.

It needs to be emphasised that the dimensions of the expandable part 22 (for example material thickness and diameter) depend on the vehicle model can differ from the examples given above.

### List of reference numbers

- 10: vehicle
- 12: roof
- 14: roof bar
- 16: region of the bonnet
- 18: support structure
- 20: A-pillar
- 20a: first end (lower end)
- 20b: second end (upper end)
- 22: expandable part
- 22a: first end (lower end)
- 22b: second end (upper end)
- 23: folding recess
- 24: outer surface
- 26: inner lining
- 30: supporting element
- 32: rod
- 32a: plate-shaped end
- 34: ring
- 34a: protrusion
- 40: gas generator
- 50: end cap
- 52: weld seam
- 54: flange with thread

## Claims

1. Elongated structure for a vehicle (10) such as an A- B- or C-pillar (20) extending from a first (20a) end being connected to a first part of the vehicle to a second end (20b), said elongated structure comprising an expandable part (22) being in fluid connection to an inflator (40), wherein the diameter of the elongated structure enlarges at least in sections when the expandable part (22) is filled by gas of the inflator (40) and thus brought from a non-deployed state into a deployed state, in order to increase a stiffness of the elongated structure;
**characterised in that** additionally a supporting element (30) is present, said supporting element (30) comprising a supporting section being located near the expandable part (22) between the first end and the second end of the elongated structure and being fixed to a portion of the vehicle other than the expandable part, wherein the supporting section does not support the expandable part (22) when the expandable part (22) is in its non-deployed state, and
wherein the supporting section has at least one encircling section that encircles the expandable part (22) in order to support the expandable part (22) in its deployed state.

2. Elongated structure according to claim 1, **characterised in that** the supporting element further comprises a connecting section being connected to the support section, said supporting element being fixed to the vehicle near the first part of the vehicle via the connecting section..

3. Elongated structure according to claim 1, **characterised in that** the supporting section is connected to an outer surface (24) of the elongated structure.

4. Elongated structure according to any one of the preceding claims, **characterised in that** the inner diameter of the encircling section corresponds to the maximum diameter or less of the expandable part (22) at the position of the supporting section when the expandable part is in its deployed state, but is larger than the diameter of the expandable part (22) when the expandable part is in its non-deployed state.

5. Elongated structure according to any one of the preceding claims, **characterised in that** the encircling section has a ring- sleeve- or ribbon-shape.

6. Elongated structure according to any one of the preceding claims, **characterised in that** the encircling section is a hollow cylinder.

7. Elongated structure according to one of the preceding claims, **characterised in that** the elongated structure is an A-pillar (20) of the vehicle extending from the first end upwardly.

8. Elongated structure according to claim 7, **characterised in that** the supporting section is located in the lower third of the A-pillar (20).

9. Elongated structure according to claim 7 or claim 8, **characterised in that** the inflator is located near the first end of the A-pillar.

10. Elongated structure according to one of the preceding claims, **characterised in that** the inflator extends into the expandable part (22).

11. Elongated structure according to one of the preceding claims, **characterised in that** the expandable part (22) has a folding recess (23).

12. Elongated structure according to one of the preceding claim, **characterised in that** the thickness of the material of the expandable part is approximately 1,5 mm.

13. Elongated structure according to one of the preceding claims, **characterised in that** the diameter of the expandable part (22) is approximately 60 mm in its deployed state.

## Patentansprüche

1. Längliche Struktur für ein Fahrzeug (10), wie zum Beispiel ein A- B-oder C-Ständer (20), der sich von einem ersten Ende (20a), das mit einem ersten Teil des Fahrzeugs verbunden ist, zu einem zweiten Ende (20b) erstreckt, wobei die längliche Struktur einen dehnbaren Teil (22) aufweist, der in Fluidverbindung mit einer Aufblasvorrichtung (40) ist, wobei sich der Durchmesser der länglichen Struktur mindestens in Abschnitten erweitert, wenn der dehnbare Teil (22) mit Gas des Aufblasgeräts (40) gefüllt wird und daher von einem nicht aufgedehnten Zustand in einen aufgedehnten Zustand gebracht wird, um eine Steifigkeit der länglichen Struktur zu erhöhen,
**dadurch gekennzeichnet, dass** zusätzlich ein Tragelement (30) vorhanden ist, wobei das Tragelement (30) einen Tragabschnitt aufweist, der sich nahe dem dehnbaren Teil (22) zwischen dem ersten Ende und dem zweiten Ende der länglichen Struktur befindet und an einem anderen Teil des Fahrzeugs als dem dehnbaren Teil befestigt ist, wobei der Tragabschnitt den dehnbaren Teil (22) nicht stützt, wenn der dehnbare Teil (22) in seinem nicht aufgedehnten Zustand ist, und wobei der Tragabschnitt mindestens einen umringenden Abschnitt hat, der den dehnbaren Teil (22) umringt, um den dehnbaren Teil (22) in seinem aufgedehnten Zustand zu tragen.

2. Längliche Struktur nach Anspruch 1, **dadurch gekennzeichnet, dass** das Tragelement ferner einen Verbindungsabschnitt aufweist, der mit dem Tragabschnitt verbunden ist, wobei das Tragelement an dem Fahrzeug nahe dem ersten Teil des Fahrzeugs über den Verbindungsabschnitt verbunden ist.

3. Längliche Struktur nach Anspruch 1, **dadurch gekennzeichnet, dass** der Tragabschnitt mit einer äußeren Oberfläche (24) der länglichen Struktur verbunden ist.

4. Längliche Struktur nach einem der vorhergehenden Ansprüche,
**dadurch gekennzeichnet, dass** der Innendurchmesser des umringenden Abschnitts dem maximalen Durchmesser oder weniger des dehnbaren Teils (22) an der Position des Tragabschnitts entspricht, wenn der dehnbare Teil in seinem aufgedehnten Zustand ist, aber größer ist als der Durchmesser des dehnbaren Teils (22), wenn der dehnbare Teil in seinem nicht aufgedehnten Zustand ist.

5. Längliche Struktur nach einem der vorhergehenden Ansprüche,
**dadurch gekennzeichnet, dass** der umringende Abschnitt eine Ring-Hülsen- oder Bandform hat.

6. Längliche Struktur nach einem der vorhergehenden Ansprüche,
**dadurch gekennzeichnet, dass** der umringende Teil ein Hohlzylinder ist.

7. Längliche Struktur nach einem der vorhergehenden Ansprüche,
**dadurch gekennzeichnet, dass** die längliche Struktur ein A-Ständer (20) des Fahrzeugs ist, der sich von dem ersten Ende aufwärts erstreckt.

8. Längliche Struktur nach Anspruch 7, **dadurch gekennzeichnet, dass** der Tragabschnitt in dem unteren Drittel des A-Ständers (20) liegt.

9. Längliche Struktur nach Anspruch 7 oder 8, **dadurch gekennzeichnet, dass** das Aufblasgerät nahe dem ersten Ende des A-Ständers liegt.

10. Längliche Struktur nach einem der vorhergehenden Ansprüche,
**dadurch gekennzeichnet, dass** sich das Aufblasgerät in den dehnbaren Teil (22) erstreckt.

11. Längliche Struktur nach einem der vorhergehenden Ansprüche, **dadurch gekennzeichnet, dass** der dehnbare Teil (22) eine Faltvertiefung (23) hat.

12. Längliche Struktur nach einem der vorhergehenden Ansprüche, **dadurch gekennzeichnet, dass** die Stärke des Materials des dehnbaren Teils etwa 1,5 mm beträgt.

13. Längliche Struktur nach einem der vorhergehenden Ansprüche, **dadurch gekennzeichnet, dass** der Durchmesser des dehnbaren Teils (22) in seinem aufgedehnten Zustand etwa 60 mm beträgt.

## Revendications

1. Structure allongée pour un véhicule (10) comme un montant A, B ou C (20) s'étendant d'une première extrémité (20a) étant raccordée à une première partie du véhicule jusqu'à une deuxième extrémité (20b), ladite structure allongée comprenant une partie expansible (22) étant en raccordement fluide avec un gonfleur (40), le diamètre de la structure allongée s'agrandit au moins en sections lorsque la partie expansible (22) est remplie de gaz par le gonfleur (40) et est donc mise d'un état non déployé dans un état déployé afin d'augmenter la rigidité de la structure allongée,
**caractérisé en ce qu'**en plus un élément de support (30) est présent, ledit élément de support (30) comprenant une section de support étant située près de la partie expansible (22) entre la première extrémité et la deuxième extrémité de la structure allongée et étant fixé à une partie du véhicule autre que la partie expansible, la section de support ne supportant pas la partie expansible (22) lorsque la partie expansible (22) est dans son état non déployé, et
la section de support ayant au moins une section encerclante qui encercle la partie expansible (22) afin de supporter la partie expansible (22) dans son état déployé.

2. Structure allongée selon la revendication 1 **caractérisée en ce que** l'élément de support comprend en plus une section de raccordement étant raccordée à la section de support, ledit élément de support étant fixé au véhicule près de la première partie du véhicule par l'intermédiaire de la section de raccordement.

3. Structure allongée selon la revendication 1 **caractérisée en ce que** la section de support est raccordée à une surface extérieure (24) de la structure allongée.

4. Structure allongée selon une quelconque des revendications précédentes **caractérisée en ce que** le diamètre intérieur de la section encerclante correspond au diamètre maximum ou moins de la partie expansible (22) à la position de la section de support lorsque la partie expansible est dans son état déployé, mais est plus grand que le dimètre de la partie expansible (22) lorsque la partie expansible est dans son état non déployé.

5. Structure allongée selon une quelconque des revendications précédentes **caractérisée en ce que** la section encerclante a une forme d'anneau, de manchon ou de ruban.

6. Structure allongée selon une quelconque des revendications précédentes **caractérisée en ce que** la section encerclante est un cylindre creux.

7. Structure allongée selon une quelconque des revendications précédentes **caractérisée en ce que** la structure allongée est un montant A (20) du véhicule s'étendant depuis la première extrémité vers le haut.

8. Structure allongée selon la revendication 7 **caractérisée en ce que** la section de support est située dans le tiers inférieur du montant A (20).

9. Structure allongée selon la revendication 7 ou la revendication 8 **caractérisée en ce que** le gonfleur est situé près de la première extrémité du montant A.

10. Structure allongée selon une quelconque des revendications précédentes **caractérisée en ce que** le gonfleur s'étend dans la partie expansible (22).

11. Structure allongée selon une quelconque des revendications précédentes **caractérisée en ce que** la partie expansible (22) possède un évidement pliant (23).

12. Structure allongée selon une quelconque des revendications précédentes **caractérisée en ce que** l'épaisseur du matériau de la partie expansible est d'environ 1,5 mm.

13. Structure allongée selon une quelconque des revendications précédentes **caractérisée en ce que** le diamètre de la partie expansible (22) est d'environ 60 mm dans son état déployé.
